# EUROPEAN PATENT APPLICATION

(11) **EP 4 492 486 A2**
(43) Date of publication of application: **15.01.2025**
(21) Application number: 24178902.3
(22) Date of filing: 29.05.2024
(51) Int. Cl.: H01M 4/131, H01M 4/525, H01M 10/42

(54) **POSITIVE ELECTRODE FOR RECHARGEABLE LITHIUM BATTERY AND RECHARGEABLE LITHIUM BATTERY INCLUDING SAME**

(30) Priority: 14.07.2023 KR 20230092007
(71) Applicant: Samsung SDI Co., Ltd., Yongin-si, Gyeonggi-do 17084 (KR)
(72) Inventor: LEE, Tae Jin, 17084 Yongin-si (KR); WOO, Myungheui, 17084 Yongin-si (KR)
(74) Representative: Marks & Clerk LLP

(57) **Abstract**

A positive electrode and a rechargeable lithium battery including the same, and the positive electrode includes a current collector, a positive electrode including a positive active material, and a heat suppression layer between the current collector and the positive active material layer, wherein a thickness ratio of the heat suppression layer and the positive active material layer is about 1:5 to about 1:20.

## Description

### BACKGROUND

### 1. Field

Embodiments of the present disclosure described herein are related to a positive electrode for a rechargeable lithium battery and a rechargeable lithium battery including the same.

### 2. Description of the Related Art

Recently, the rapid development of electronic devices such as mobile phones, laptop computers, and/or electric vehicles using batteries is increasing the demand for rechargeable lithium batteries with relatively high capacity and lighter weight.

Such rechargeable lithium batteries may include a positive electrode including a positive active material, a negative electrode including a negative active material, a separator between the positive electrode and the negative electrode, and an electrolyte.

### SUMMARY

Aspects according to one or more embodiments are directed toward a positive electrode for a rechargeable lithium battery exhibiting improved safety.

Aspects according to one or more embodiments are directed toward a rechargeable lithium battery including the positive electrode.

Additional aspects will be set forth in part in the description which follows and, in part, will be apparent from the description, or may be learned by practice of the presented embodiments of the disclosure.

One or more embodiments provide a positive electrode including: a current collector; a positive active material layer including a positive active material; and a heat suppression layer between the current collector and the positive active material layer, wherein a thickness ratio of the heat suppression layer and the positive active material layer is about 1:5 to about 1:20.

Embodiments provide a rechargeable lithium battery including the positive electrode, a negative electrode including a negative active material; and an electrolyte.

At least some of the above and other features of the invention are set out in the claims.

Other embodiments are included in the following detailed description.

A positive electrode for a rechargeable lithium battery may exhibit excellent or suitable safety.

### BRIEF DESCRIPTION OF THE DRAWINGS

FIG. 1 is a schematic view showing a positive electrode for a rechargeable lithium battery.
FIG. 2 is a schematic diagram showing a rechargeable lithium battery according to one or more embodiments.

### DETAILED DESCRIPTION

Hereinafter, embodiments of the present disclosure are described in more detail. However, these embodiments are merely examples, the present disclosure is not limited thereto, and the present disclosure is defined by the scope of claims.

Terms utilized in the specification are utilized to explain embodiments, but are not intended limit the present disclosure. Expressions in the singular include expressions in plural unless the context clearly dictates otherwise.

The term "combination thereof' may include a mixture, a laminate, a complex, a copolymer, an alloy, a blend, a reactant of constituents.

The terms "comprise", "include" or "have" are intended to designate that the performed characteristics, numbers, steps, constituted elements, or a combination thereof is present, but it should be understood that the possibility of presence or addition of one or more other characteristics, numbers, steps, constituted elements, or a combination are not to be precluded in advance.

In addition, the terms "about" and "substantially" utilized throughout the present specification refer to the meaning of the mentioned with inherent preparation and material permissible errors when presented, and are utilized in the sense of being close to or near that value. They are utilized to help understand the present disclosure and to prevent or reduce unconscientious infringers from unfairly exploiting the disclosure where accurate or absolute values are mentioned. For example, "about" may refer to within one or more standard deviations, or within ± 30%, 20%, 10%, 5% of the stated value.

Herein, "or" is not to be construed as an exclusive meaning, for example, "A or B" is construed to include A, B, A+B, and/or the like.

As utilized herein, when a definition is not otherwise provided, a particle diameter or size may be an average particle diameter. Such a particle diameter indicates an average particle diameter or size (D50) where a cumulative volume is about 50 volume% in a particle size distribution. The particle size (D50) may be measured by a method suitable to those skilled in the art, for example, by a particle size analyzer, or by a transmission electron microscopic image, or a scanning electron microscopic image. In some embodiments, a dynamic light-scattering measurement device is utilized to perform a data analysis, and the number of particles is counted for each particle size range, and from this, the average particle diameter (D50) value may be easily obtained through a calculation. In another embodiment, it may be measured by a laser diffraction method. The laser diffraction may be obtained by distributing particles to be measured in a distribution solvent and introducing it to a commercially available laser diffraction particle measuring device (e.g., MT 3000 available from Microtrac, Ltd.), irradiating ultrasonic waves of about 28 kHz at a power of 60 W, and calculating an average particle diameter (D50) in the 50% standard of particle distribution in the measuring device. In the present disclosure, when particles are spherical, "diameter" indicates a particle diameter or an average particle diameter, and when the particles are non-spherical, the "diameter" indicates a major axis length or an average major axis length.

As utilized herein, the term "and/or" includes any and all combinations of one or more of the associated listed items. As used herein, expressions such as "at least one of", "one of", and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

Also, any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

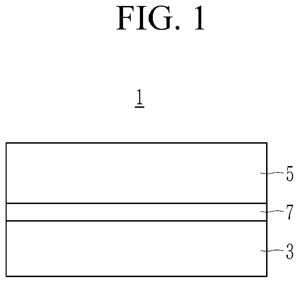

One or more embodiments provide a positive electrode for a rechargeable lithium battery including: a current collector; a positive active material layer including a positive active material; and a layer for suppressing heat generation (i.e. heat suppression layer) between the current collector and the positive active material layer. FIG. 1 schematically shows the positive electrode 1, and the positive electrode 1 includes a current collector 3 and a positive active material layer 5, and a heat suppression layer 7 between the current collector 3 and the positive active material layer 5. FIG. 1 shows that a boundary between the positive active material layer 5 and the heat suppression layer 7 is clearly separated, but the positive electrode according to one or more embodiments is not limited thereto. For example, the boundary contacted between the positive active material layer and the heat suppression layer may not be clearly separated, and they may overlap (or be mixed with) each other. At the boundary where the positive active material layer contacts with the heat suppression layer, there may be a region where the components that compose the positive active material layer and the heat suppression layer coexist. Such a region may be generated during the preparation. The component composing the positive active material layer may be partially impregnated into a surface of the heat suppression layer.

A thickness ratio of the heat suppression layer and the positive active material layer is about 1:5 to about 1:20, for example, about 1:8 to about 1:15. If (e.g., when) the thickness ratio of the heat suppression layer and the positive active material layer is within the range, the effects for improving safety owing to the utilization of the heat suppression layer may be effectively obtained.

In one or more embodiments, the heat suppression layer serves to enhance safety by preventing or reducing occurrence such as battery explosion and fire, and/or the like, if (e.g., when) the battery is pierced by a sharp object such as a nail, or subjected to a physical impact such as a penetration. Such enhancement in safety is achieved if (e.g., when) included in the thickness ratio. If (e.g., when) the thickness ratio of the heat suppression layer and the positive active material layer is out of the range, for example, larger than about 1/5, indicating that the thickness of the heat suppression layer is too thick, capacity is relatively reduced. If (e.g., when) it is smaller than about 1/20 indicating that the thickness of the heat suppression layer is too thin, the improvements in safety may be not sufficiently obtained.

In one or more embodiments, the thickness of the heat suppression layer may be about 1 µm to about 10 µm, about 1 µm to about 8 µm, or about 1 µm to about 6 µm.

The thickness of the positive active material layer may be about 30 µm to about 200 µm, about 50 µm to about 150 µm, or about 80 µm to about 120 µm.

It is appropriate or suitable that the thicknesses of the heat suppression layer and the positive active material layer is included in the range, and the thickness ratio of the heat suppression layer and the positive active material layer is within the range. Even if (e.g., when) the thicknesses of the heat suppression layer and the positive active material layer each fall into the range, if (e.g., when) the thickness ratio of the heat suppression layer and the positive active material layer is outside the range, the desired or suitable effects may be not achieved. For example, the thickness of the heat suppression layer is 2 µm and the thickness of the positive active material layer is 200 µm, which corresponds to the thickness ratio of the heat suppression layer and the positive active material layer being 1:100, which is not appropriate or suitable.

If (e.g., when) the thickness of the heat suppression layer is within the range, the suitable safety effects and capacity may be suitably obtained.

### Layer for suppressing heat generation

In one or more embodiments, the heat suppression layer may include a compound for suppressing heat generation selected from among (e.g., may be at least one of) FeFs, FeF₂, CuF₂, MoCl₅, NiF₂, FeCl₃, CoF₃, CoF₂, MnF₃, NbF₃, TiF₄, ZnF₂, BiF₃, TiO₂, SeO₂, CuO, CuO₂, P₂S₅, P₄S₇, NiS₂, CoS₂, Co₃O₄, FeS₂, MoO₃, SiS₂, MnO₂, Fe₂O₃, V₂O₅, LiFeF₃, LiFeF₂, LiCuF₂, LiNiF₂, LiFeCl₃, LiCoF₃, LiCoF₂, LiMnF₃, LiNbF₃, LiTiF₄, LiBiF₃, LiTiO₂, Li₄Ti₅O₁₂, LiSeO₂, LiCuO, Li₂CuO₂, Li₂P₂S₅, LiNiS₂, LiCoS₂, LiCo₃O₄, LiFeS₂, LiMoO₃, Li₂SiS₂, LiMnO₂, LiFe₂O₃, LiV₂O₅, Li₂S₈, and combinations thereof (e.g., the compound is at least one of FeF₃, FeF₂, CuF₂, MoCl₅, NiF₂, FeCl₃, CoF₃, CoF₂, MnF₃, NbF₃, TiF₄, ZnF₂, BiF₃, TiO₂, SeO₂, CuO, CuO₂, P₂S₅, P₄S₇, NiS₂, CoS₂, Co₃O₄, FeS₂, MoO₃, SiS₂, MnO₂, Fe₂O₃, V₂O₅, LiFeF₃, LiFeF₂, LiCuF₂, LiNiF₂, LiFeCl₃, LiCoF₃, LiCoF₂, LiMnF₃, LiNbF₃, LiTiF₄, LiBiF₃, LiTiO₂, Li₄Ti₅O₁₂, LiSeO₂, LiCuO, Li₂CuO₂, Li₂P₂S₅, LiNiS₂, LiCoS₂, LiCo₃O₄, LiFeS₂, LiMoO₃, Li₂SiS₂, LiMnO₂, LiFe₂O₃, LiV₂O₅, Li₂S₈, or a combination thereof). In another embodiment, the compound for suppressing heat generation may include (e.g., be) FeFs, TiO₂, LiFeF₃, LiFeF₂, or a combination thereof. In another embodiment, the compound for suppressing heat generation may include (e.g., be) FeFs, TiO₂, or a combination thereof.

Such a compound for suppressing heat generation may have nano sizes, and, for example, may have an average particle diameter D50 of about 1 µm or less. The compound for suppressing heat generation may have an average particle diameter D50 of about 100 nm to about 900 nm, or about 300 nm to about 700nm. If (e.g., when) the compound for suppressing heat generation has nano sizes, for example, has an average particle diameter within the range, the heat suppression layer may be more densely formed.

The heat suppression layer according to one or more embodiments may have a smooth surface. This is due to the pressurization during the positive electrode preparation. Such smooth heat suppression layer may render to be readily impregnated with a liquid electrolyte.

The heat suppression layer may further include a binder. The binder may include polyvinylidene fluoride, polyvinyl alcohol, carboxymethyl cellulose, hydroxypropyl cellulose, diacetyl cellulose, polyvinylchloride, carboxylated polyvinylchloride, polyvinyl fluoride, polyethylene oxide, polyvinylpyrrolidone, polyurethane, polytetrafluoroethylene, polyethylene, polypropylene, a styrene-butadiene rubber, an acrylated styrene-butadiene rubber, an epoxy resin, nylon, or a combination thereof.

In the heat suppression layer according to one or more embodiments, a mixing ratio of the compound for suppressing heat generation and the binder may be a weight ratio of about 200:1 to about 20:1, about 150:1 to about 50:1, or about 120:1 to about 80:1. If (e.g., when) the mixing ratio of the compound for suppressing heat generation and the binder is satisfied into the range, the effects for controlling battery thermal runaway may be largely obtained.

### Positive active material layer

A positive active material included in the positive active material layer may be any positive active material utilized in the rechargeable lithium battery.

The positive active material may include lithiated intercalation compounds that reversibly intercalate and deintercalate lithium ions. In other embodiments, one or more composite oxides of a metal selected from cobalt, manganese, nickel, and a combination thereof, and lithium may be utilized. For example, the compounds represented by one of the following chemical formulae may be utilized. LiₐA_{1-b}X_{b}D¹₂ (0.90≤a≤1.8, 0≤b≤0.5); LiₐA_{1-b}X_{b}O_{2-c1}D¹_{c1} (0.90≤a≤1.8, 0≤b≤0.5, 0≤c1≤0.05); LiₐE_{1-b}X_{b}O_{2-c1}D¹_{c1} (0.90≤a≤1.8, 0≤b≤0.5, 0≤c1≤0.05); LiₐE_{2-b}X_{b}O_{4-c1}D¹_{c1} (0.90≤a≤1.8, 0≤b≤0.5, 0≤c1≤0.05); LiₐNi_{1-b-c}Co_{b}X_{c}D¹_{α} (0.90≤a≤1.8, 0≤b≤0.5, 0≤c≤0.5, 0<α≤2); LiₐNi_{1-b-c}Co_{b}X_{c}O_{2-α}T_{α} (0.90≤a≤1.8, 0≤b≤0.5, 0≤c≤0.5, 0<α<2); LiₐNi_{1-b-c}Co_{b}X_{c}O_{2-α}T₂ (0.90≤a≤1.8, 0≤b≤0.5, 0≤c≤0.5, 0<α<2); LiₐNi_{1-b-c}Mn_{b}X_{c}D¹_{α} (0.90≤a≤1.8, 0≤b≤0.5, 0≤c≤0.5, 0<α≤2); LiₐNi_{1-b-c}Mn_{b}X_{c}O_{2-α}T_{α} (0.90≤a≤1.8, 0≤b≤0.5, 0≤c≤0.5, 0<α<2); LiₐNi_{1-b-c}Mn_{b}X_{c}O_{2-α}T₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); QO₂; QS₂; LiQS₂; V₂O₅; LiV₂O₅; LiZO₂; LiNiVO₄; Li_{(3-f)}J₂(PO₄)₃ (0≤f≤2); Li_{(3-f)}Fe₂(PO₄)₃ (0≤f≤2); LiₐFePO₄ (0.90≤a≤1.8).

In the above chemical formulae, A is selected from Ni, Co, Mn, or a combination thereof; X is selected from Al, Ni, Co, Mn, Cr, Fe, Mg, Sr, V, a rare earth element, or a combination thereof; D' is selected from O, F, S, P, or a combination thereof; E is selected from Co, Mn, or a combination thereof; T is selected from F, S, P, or a combination thereof; G is selected from Al, Cr, Mn, Fe, Mg, La, Ce, Sr, V, or a combination thereof; Q is selected from Ti, Mo, Mn, or a combination thereof; Z is selected from Cr, V, Fe, Sc, Y, or a combination thereof; J is selected from V, Cr, Mn, Co, Ni, Cu, or a combination thereof; and L¹ is selected from Mn, Al, or a combination thereof.

Also, the compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive active material by utilizing these elements in the compound, and for example, the method may include any coating method such as spray coating, dipping, and/or the like, but is not illustrated in more detail because it is suitable (known) in the related field.

In the positive electrode, an amount of the positive active material may be about 90 wt% to about 99.5 wt% based on the total weight of the positive active material layer.

The positive active material layer includes a binder and a conductive material. Herein, the binder and the conductive material may be included in an amount of about 0.25 wt% to about 5 wt%, respectively based on the total amount of the positive active material layer.

The binder improves binding properties of positive active material particles with one another and with a current collector. Examples of the binder may be polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinyl pyrrolidone, polyurethane, polytetrafluoroethylene, polyvinylidene fluoride, polyethylene, polypropylene, styrene-butadiene rubber, an acrylated styrene-butadiene rubber, an epoxy resin, nylon, and/or the like, but is not limited thereto.

The conductive material is included to provide electrode conductivity, and any electrically conductive material may be utilized as a conductive material unless it causes a chemical change, and the examples thereof may include a carbon-based material such as natural graphite, artificial graphite, carbon black, acetylene black, ketjen black, a carbon fiber and/or the like; a metal-based material of a metal powder or a metal fiber including copper, nickel, aluminium, silver, and/or the like; a conductive polymer such as a polyphenylene derivative; and/or one or more mixtures (and/or combinations) thereof.

The current collector may include Al, but is not limited thereto.

### Positive electrode preparation

The positive electrode according to one or more embodiments may be manufactured by forming a heat suppression layer on a current collector and preparing a positive active material layer on the heat suppression layer.

The heat suppression layer may be formed by coating a heat suppression layer composition, including a heat suppression compound, a binder, and a first solvent, on a current collector, and drying. The first solvent may be N-methyl pyrrolidone, and/or the like, but is not limited thereto.

Amounts of the compound for suppressing heat generation and the binder may be utilized in order to have a mixing ratio of the compound for suppressing heat generation and the binder to be a weight ratio of about 9:1 to 39:1, about 15:1 to about 30:1, or about 20:1 to about 25:1 in the prepared layer for suppressing heat generation.

The positive active material layer may be prepared by coating a positive active material composition including a positive active material, a binder, a conductive material, and a second solvent on the heat suppression layer and drying. After drying the positive active material layer, a pressurization may be performed.

The second solvent may be N-methyl pyrrolidone, and/or the like, but is not limited thereto.

### Rechargeable lithium battery

Other embodiments provide a rechargeable lithium battery including the positive electrode, a negative electrode including a negative active material, and an electrolyte.

The negative electrode includes a current collector and a negative active material layer and the negative active material layer includes a negative active material.

The negative active material includes a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may be a carbon material that may be any generally-utilized carbon-based negative active material utilized in a lithium secondary battery. Examples thereof may be crystalline carbon, amorphous carbon, or a combination thereof. The crystalline carbon may be shapeless (unspecified shape), or may be sheet, flake, spherical, or fiber shaped natural graphite or artificial graphite, and the amorphous carbon may be soft carbon, hard carbon, a mesophase pitch carbonized product, sintered cokes, and/or the like.

The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and/or Sn.

The material capable of doping/dedoping lithium may be a Si-based active material, a Sn-based active material, or a combination thereof. The Si-based active material may be Si, a Si-C composite, SiOₓ (0<x<2), a Si-Q alloy (herein Q is an element selected from an alkali metal, an alkaline-earth metal, a Group 13 element, a Group 14 element, a Group 15 element, a Group 16 element, a transition metal, a rare earth element, and a combination thereof, and not Si), or a combination thereof. The Sn-based active material may be Sn, SnO₂, Sn-R alloy wherein R is an element selected from an alkali metal, an alkaline-earth metal, a Group 13 element, a Group 14 element, a Group 15 element, a Group 16 element, a transition metal, a rare earth element, and a combination thereof, and not Sn), or a combination thereof. At least one of the Si-based active material or the Sn-based active material may be mixed with SiO₂. The elements Q and R may (each) be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

In one or more embodiments, the Si-C composite may include silicon particles and an amorphous carbon coating layer formed on a surface of the silicon particles. For example, the Si-C composite may include silicon nano particles and an amorphous carbon coating layer positioned on a surface of the silicon nano particles. The Si-C composite may include a secondary particle in which silicon primary particles (primary silicon particles) are agglomerated, and an amorphous carbon coating layer positioned on a surface of the secondary particle. The amorphous carbon may be also positioned between the silicon primary particles, and/or, for example, the silicon primary particles or the silicon may be coated with amorphous carbon. In one or more embodiments, the SiC (silicon-carbon) composite may include a core in which silicon particles are distributed in an amorphous carbon matrix and an amorphous carbon coating layer coated on a surface of the core.

The secondary particle may be referred to as a core or a center part, as it is positioned at the center of the Si-C composite. The amorphous carbon coating layer may be referred to as an outer part or a shell.

The silicon primary particles may include nano silicon particles. The nano silicon particles may have a particle diameter of about 10 nm to about 1,000 nm, and according to other embodiments, may be about 20 nm to about 900 nm, about 20 nm to about 800 nm, about 20 nm to about 500 nm, about 20 nm to about 300 nm, or about 20 nm to about 150 nm. If (e.g., when) the particle diameter of the silicon is within the range, the extreme volume expansion caused during charge and discharge may be suppressed or reduced, and a breakage of the conductive path due to crushing of particles may be prevented or reduced. The particle diameter of the silicon secondary particles is not limited thereto.

If (e.g., when) the Si-C composite includes silicon particles and an amorphous carbon coating layer, an amount of the silicon particles may be about 30 wt% to about 70 wt%, or about 40 wt% to about 65 wt% based on the total 100 wt% of the silicon-carbon composite. An amount of the amorphous carbon coating layer may be about 30 wt% to about 70 wt%, or about 35 wt% to about 60 wt% based on the total 100 wt% of the silicon-carbon composite.

The Si-C composite may further include crystalline carbon. If (e.g., when) the Si-C composite further includes crystalline carbon, it may include an agglomerated product in which silicon particles and crystalline carbon are agglomerated, and an amorphous carbon coating layer positioned on a surface of the agglomerated product.

In one or more embodiments, the secondary particles or the core may further include crystalline carbon. If (e.g., when) the Si-C composite further includes crystalline carbon, the Si-C composite may include secondary particles where silicon primary particles and crystalline carbon are agglomerated, and an amorphous carbon coating layer positioned on a surface of the secondary particles. The crystalline carbon may be unspecified shaped, sheet, flake, spherical, or fiber shaped natural graphite or artificial graphite.

If (e.g., when) the Si-C composite further includes crystalline carbon, an amount of the silicon nano particles may be about 20 wt% to about 70 wt%, or about 25 wt% to about 65 wt% based on the total 100 wt% of the Si-C composite. Based on the total 100 wt% of the Si-C composite, an amount of amorphous carbon may be about 25 wt% to about 70 wt%, or about 25 wt% to about 60 wt%, and an amount of crystalline carbon may be about 1 wt% to about 20 wt%, or about 5 wt% to about 15 wt%.

The particle diameter of the Si-C composite may be appropriately adjusted, and there is no need to limit it.

A thickness of the amorphous carbon coating layer may be suitably adjusted, but, for example, may be about 5 nm to about 100 nm.

In one or more embodiments, the Si-based active material is included as a first negative active material, and crystalline carbon may be included as a second negative active material. A mixing ratio of the first negative active material and the second negative active material may be a weight ratio of about 1:99 to about 99:1. For example, the negative active material may include the first negative active material and the second negative active material at a weight ratio of about 1:99 to about 50:50, or a weight ratio of about 5:95 to about 20:80.

The negative active material layer may include a binder, and further include a conductive material. In the negative active material layer, an amount of the binder may be about 1 wt% to about 5 wt% based on the total amount of the negative active material layer. Further, when the negative active material layer includes a conductive material, the negative active material layer includes about 90 wt% to about 98 wt% of the negative active material, about 1 wt% to about 5 wt% of the binder, and about 1 wt% to about 5 wt% of the conductive material.

The binder improves binding properties of negative active material particles with one another and with a current collector. The binder includes a non-aqueous binder, an aqueous binder, or a combination thereof.

The non-aqueous binder may be an ethylene propylene copolymer, polyacrylonitrile, polystyrene, polyvinylchloride, carboxylated polyvinylchloride, polyvinyl fluoride, polyurethane, polytetrafluoroethylene, polyvinylidene fluoride, polyethylene, polypropylene, polyamideimide, polyimide, or combinations thereof.

The aqueous binder may include a styrene-butadiene rubber, an acrylated styrene-butadiene rubber, an acrylonitrile-butadiene rubber, an acrylic rubber, a butyl rubber, a fluorine rubber, an ethylene oxide-containing polymer, polyvinylpyrrolidone, polyepichlorohydrin, polyphosphazene, an ethylene propylene diene copolymer, polyvinylpyridine, chlorosulfonated polyethylene, latex, a polyester resin, an acrylic resin, a phenolic resin, an epoxy resin, polyvinyl alcohol, or combinations thereof.

The negative electrode binder may include a cellulose-based compound. In other embodiments, the negative electrode binder may include the aqueous binder mixed with the cellulose-based compound. The cellulose-based compound includes one or more of carboxymethyl cellulose, hydroxypropyl methyl cellulose, methyl cellulose, or alkali metal salts thereof. The alkali metal may be Na, K, or Li. The cellulose-based compound may be referred to as a thickener, because it may impart viscosity, or it may serve as a binder and thus, it may be referred to as a binder. An amount of the cellulose-based compound may be appropriately adjusted within the amount of the binder and it is not limited thereto, but, for example, an amount of the cellulose-based compound may be about 0.1 parts by weight to about 3 parts by weight based on 100 parts by weight of the negative active material.

The conductive material is included to provide electrode conductivity, and any electrically conductive material may be utilized as a conductive material unless it causes a chemical change. Examples of the conductive material may be a carbon-based material such as natural graphite, artificial graphite, carbon black, acetylene black, ketjen black, a carbon fiber, and/or the like; a metal-based material of a metal powder or a metal fiber including copper, nickel, aluminium, silver, and/or the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof, but is not limited thereto.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, caprolactone, and/or the like. The ether-based solvent may include dibutyl ether, tetraglyme, diglyme, dimethoxyethane, 2-methyltetrahydrofuran, tetrahydrofuran, and/or the like. Furthermore, the ketone-based solvent may include cyclohexanone, and/or the like. In some embodiments, the alcohol-based solvent may include ethanol, isopropyl alcohol, and/or the like, and the aprotic solvent may include nitriles such as R-CN (where R is a C2 to C20 linear, branched, or cyclic hydrocarbon, and may include a double bond, an aromatic ring, or an ether bond), amides such as dimethylformamide, and/or the like, dioxolanes such as 1,3-dioxolane, 1,4-dioxolane, and/or the like, sulfolanes, and/or the like.

The non-aqueous organic solvent may be utilized alone or in a mixture. If (e.g., when) the non-aqueous organic solvent is utilized in a mixture, the mixture ratio may be controlled or selected in accordance with a desirable battery performance, and it may be well suitable to those skilled in the related art.

If (e.g., when) the non-aqueous organic solvent is mixed and utilized, a mixed solvent of a cyclic carbonate and a chain carbonate, a mixed solvent of a cyclic carbonate and a propionate-based solvent, or a mixed solvent of a cyclic carbonate, a chain carbonate, and a propionate-based solvent may be utilized. The propionate-based solvent may be methyl propionate, ethyl propionate, propyl propionate, or a combination thereof.

If (e.g., when) the cyclic carbonate and the chain carbonate or the cyclic carbonate and the propionate-based solvent are mixed, they may be mixed in a volume ratio of about 1:1 to about 1:9 and thus performance of an electrolyte solution may be improved. If (e.g., when) the cyclic carbonate, the chain carbonate, and the propionate-based solvent are mixed, they may be mixed in a volume ratio of about 1:1:1 to about 3:3:4. The mixing ratios of the solvents may be appropriately adjusted according to desirable properties.

The non-aqueous organic solvent may further include an aromatic hydrocarbon-based solvent as well as the carbonate-based solvent. The carbonate-based solvent and aromatic hydrocarbon-based solvent may be mixed together in a volume ratio of about 1:1 to about 30:1.

The aromatic hydrocarbon-based solvent may be an aromatic hydrocarbon-based compound represented by Chemical Formula 1.

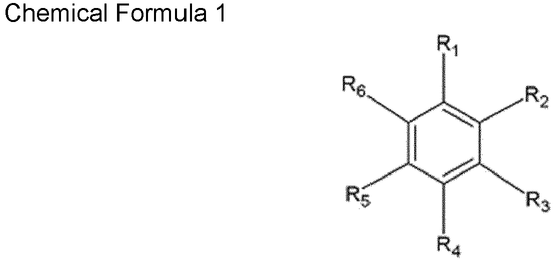

(In Chemical Formula 1, R₁ to R₆ may each independently be the same or different and are selected from hydrogen, a halogen, a C1 to C10 alkyl group, a haloalkyl group (*e.g*. a C1 to C10 haloalkyl group), and a combination thereof.

Examples of the aromatic hydrocarbon-based solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and one or more combinations thereof.

The electrolyte may further include vinylene carbonate, or an ethylene carbonate-based compound represented by Chemical Formula 2, as an additive for improving cycle life.

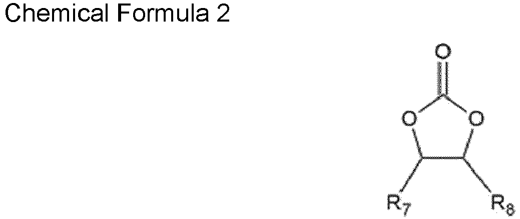

In Chemical Formula 2, R₇ and R₈ may each independently be the same or different and may each independently be hydrogen, a halogen, a cyano group (CN), a nitro group (NO₂), or a C1 to C5 fluoroalkyl group, provided that at least one of R₇ and R₈ is a halogen, a cyano group (CN), a nitro group (NO₂), or a C1 to C5 fluoroalkyl group, and R₇ and R₈ are not concurrently (e.g., not simultaneously) hydrogen.

Examples of the ethylene carbonate-based compound may include difluoroethylene carbonate, chloroethylene carbonate, dichloroethylene carbonate, bromoethylene carbonate, dibromoethylene carbonate, nitroethylene carbonate, cyanoethylene carbonate, and/or fluoroethylene carbonate. In case of further utilizing the additive for improving cycle life, an amount of the additive may be suitably controlled or selected within an appropriate or suitable range.

The lithium salt dissolved in an organic solvent supplies a battery with lithium ions, basically operates the rechargeable lithium battery, and improves transportation of the lithium ions between a positive electrode and a negative electrode. Examples of the lithium salt include at least one or two supporting salt selected from among LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, and/or LiN(CₓF₂ₓ₊₁SO₂)(C_{y}F_{2y+1}SO₂), wherein x and y are natural numbers, for example, an integer of about 1 to about 20, LiCl, LiI, LiB(C₂O₄)₂ (lithium bis(oxalate) borate: LiBOB) and lithium difluoro(oxalate)borate (LiDFOB). A concentration of the lithium salt may range from about 0.1 M to about 2.0 M. If (e.g., when) the lithium salt is included at the above concentration range, an electrolyte may have excellent or suitable performance and lithium ion mobility due to optimal or suitable electrolyte conductivity and viscosity.

A separator may be disposed between the positive electrode and the negative electrode depending on a type or kind of a rechargeable lithium battery. The separator may utilize polyethylene, polypropylene, polyvinylidene fluoride or multi-layers thereof having two or more layers and may be a mixed multilayer such as a polyethylene/polypropylene double-layered separator, a polyethylene/polypropylene/polyethylene triple-layered separator, a polypropylene/polyethylene/polypropylene triple-layered separator, and/or the like.

The separator may include a porous substrate and a ceramic-included coating layer positioned on at least one surface of the porous substrate. The ceramic may include SiO₂, Al₂O₃, Al(OH)₃, AlO(OH), TiO₂, BaTiO₂, ZnO₂, Mg(OH)₂, MgO, Ti(OH)₄, ZrO₂, aluminium nitride, silicon carbide, boron nitride, or a combination thereof.

According to some embodiments, the separator may also be a composite porous separator including a porous substrate and a functional layer positioned on the porous substrate. The functional layer may have additional functions, for example, may be at least one of a heat-resistance layer and an adhesive layer. The heat-resistance layer may include a heat-resistance resin and optionally a filler. In other embodiments, the adhesive layer may include an adhesive resin and optionally a filler. The filler may be an organic filler, an inorganic filler, or combinations thereof. The heat-resistance resin and the adhesive resin may be any materials which may be utilized in the separator in the related art.

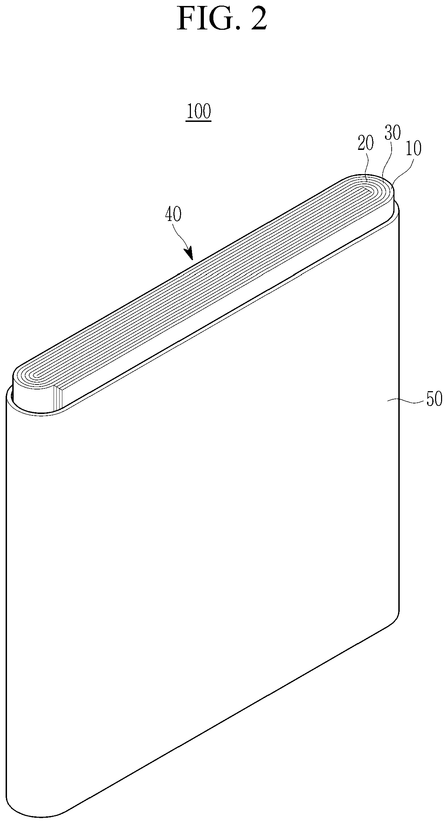

FIG. 2 is a perspective view of a rechargeable lithium battery according to some embodiments of the present disclosure. The rechargeable lithium battery according to one or more embodiments is illustrated as a prismatic battery, but is not limited thereto, and may include variously-shaped batteries such as a cylindrical battery and a pouch battery.

Referring to FIG. 2, a rechargeable lithium battery 100 according to an embodiment may include an electrode assembly 40 manufactured by winding a separator 30 disposed between a positive electrode 10 and a negative electrode 20 and a case 50 housing the electrode assembly 40. An electrolyte may be impregnated in the positive electrode 10, the negative electrode 20 and the separator 30.

Hereinafter, examples of the present disclosure and comparative examples are described. These examples, however, are not in any sense to be interpreted as limiting the scope of the present disclosure.

### Example 1

95 wt% FeF₃ with an average particle diameter (D50) of 513 nm and 5 wt% of a polyvinylidene binder were mixed in an N-methyl pyrrolidone solvent to a slurry for heat suppression layer.

98.35 wt% of a LiCoO₂ positive active material, 0.8 wt% of a polyvinylidene fluoride binder, and 0.85 wt% of a ketjen black conductive material were mixed in an N-methyl pyrrolidone solvent to prepare a positive active material layer slurry.

The slurry for heat suppression layer was coated on an Al foil current collector and dried to prepare a heat suppression layer and then the positive active material layer slurry was coated on the heat suppression layer, dried, and then pressurized to prepare a positive electrode. In the prepared positive electrode, a thickness of the heat suppression layer was 8.3 µm and a thickness of the positive active material layer was 41.7 µm. Thus, a thickness ratio of the heat suppression layer and the positive active material layer was 1:5.

Using the positive electrode, an artificial graphite negative electrode, and an electrolyte, a 4500 mAh pouch cell was fabricated. The electrolyte was utilized as a 1.35M LiPF₆ dissolved in a mixture of ethylene carbonate, propylene carbonate, ethyl propionate, and propyl propionate (10:15:30:45 by volume ratio).

### Example 2

A positive electrode was prepared by the same procedure as in Example 1, except that the slurry for heat suppression layer of Example 1 and the positive active material layer slurry of Example 1 were utilized to prepare a heat suppression layer with a thickness of 4.5 µm and a positive active material layer with a thickness of 45 µm. A thickness ratio of the heat suppression layer and the positive active material layer was 1:10.

Using the positive electrode, and the negative electrode and the electrolyte of Example 1, a 4500 mAh pouch cell was fabricated by the same procedure as in Example 1.

### Example 3

A positive electrode was prepared by the same procedure as in Example 1, except that the slurry for heat suppression layer of Example 1 and the positive active material layer slurry of Example 1 were utilized to prepare a heat suppression layer with a thickness of 2.4 µm and a positive active material layer with a thickness of 47.6 µm. A thickness ratio of the heat suppression layer and the positive active material layer was 1:20.

Using the positive electrode, and the negative electrode and the electrolyte of Example 1, a 4500 mAh pouch cell was fabricated by the same procedure as in Example 1.

### Example 4

A positive electrode was prepared by the same procedure as in Example 1, except that LiFeF₃ with an average particle diameter (D50) of 531 nm was utilized as a heat suppression compound. A thickness ratio of the heat suppression layer and the positive active material layer was 1:5.

Using the positive electrode, and the negative electrode and the electrolyte of Example 1, a 4500 mAh pouch cell was fabricated by the same procedure as in Example 1.

### Example 5

A positive electrode was prepared by the same procedure as in Example 2, except that LiFeF₃ with an average particle diameter (D50) of 531 nm was utilized as a heat suppression compound. A thickness ratio of the heat suppression layer and the positive active material layer was 1:10.

Using the positive electrode, and the negative electrode and the electrolyte of Example 1, a 4500 mAh pouch cell was fabricated by the same procedure as in Example 1.

### Example 6

A positive electrode was prepared by the same procedure as in Example 3, except that LiFeF₃ with an average particle diameter (D50) of 531 nm was utilized as a heat suppression compound. A thickness ratio of the heat suppression layer and the positive active material layer was 1:20.

Using the positive electrode, and the negative electrode and the electrolyte of Example 1, a 4500 mAh pouch cell was fabricated by the same procedure as in Example 1.

### Example 7

A positive electrode was prepared by the same procedure as in Example 1, except that LiFeF₂ with an average particle diameter (D50) of 524 nm was utilized as a heat suppression compound. A thickness ratio of the heat suppression layer and the positive active material layer was 1:5.

Using the positive electrode, and the negative electrode and the electrolyte of Example 1, a 4500 mAh pouch cell was fabricated by the same procedure as in Example 1.

### Example 8

A positive electrode was prepared by the same procedure as in Example 2, except that LiFeF₂ with an average particle diameter (D50) of 524 nm was utilized as a heat suppression compound. A thickness ratio of the heat suppression layer and the positive active material layer was 1:10.

Using the positive electrode, and the negative electrode and the electrolyte of Example 1, A 4500 mAh pouch cell was fabricated by the same procedure as in Example 1.

### Example 9

A positive electrode was prepared by the same procedure as in Example 3, except that LiFeF₂ with an average particle diameter (D50) of 524 nm was utilized as a heat suppression compound. A thickness ratio of the heat suppression layer and the positive active material layer was 1:20.

Using the positive electrode, and the negative electrode and the electrolyte of Example 1, a 4500 mAh pouch cell was fabricated by the same procedure as in Example 1.

### Example 10

A positive electrode was prepared by the same procedure as in Example 1, except that TiO₂ with an average particle diameter (D50) of 671 nm was utilized as a heat suppression compound. A thickness ratio of the heat suppression layer and the positive active material layer was 1:5.

Using the positive electrode, and the negative electrode and the electrolyte of Example 1, a 4500 mAh pouch cell was fabricated by the same procedure as in Example 1.

### Example 11

A positive electrode was prepared by the same procedure as in Example 2, except that TiO₂ with an average particle diameter (D50) of 671 nm was utilized as a heat suppression compound. A thickness ratio of the heat suppression layer and the positive active material layer was 1:10.

Using the positive electrode, and the negative electrode and the electrolyte of Example 1, a 4500 mAh pouch cell was fabricated by the same procedure as in Example 1.

### Example 12

A positive electrode was prepared by the same procedure as in Example 3, except that TiO₂ with an average particle diameter (D50) of 671 nm was utilized as a compound for suppressing heat generation. A thickness ratio of the heat suppression layer and the positive active material layer was 1:20.

Using the positive electrode, and the negative electrode and the electrolyte of Example 1, a 4500 mAh pouch cell was fabricated by the same procedure as in Example 1.

### Example 13 to Example 63

Slurries for heat generation suppression layer were prepared by the same procedures as Example 1, except that compounds shown in Table 1 were utilized instead of FeF₃ as a heat suppression compound.

A positive electrode was prepared by the same procedure as in Example 2, except that the slurry for heat generation suppression layer and the positive active material layer slurry of Example 1 were utilized to prepare a heat suppression layer with a thickness of 4.5 µm and a positive active material layer with a thickness of 45.5 µm. A thickness ratio of the heat suppression layer and the positive active material layer was 1:10.

Using the positive electrode, and the negative electrode and the electrolyte of Example 1, a 4500 mAh pouch cell was fabricated by the same procedure as in Example 1.

### Comparative Example 1

98.35 wt% of a LiCoO₂ positive active material, 0.5 wt% of a polyvinylidene fluoride binder, and 0.85 wt% of a ketjen black conductive material were mixed in an N-methyl pyrrolidone solvent to prepare a positive active material layer slurry.

The positive active material layer slurry was coated on an Al foil current collector, dried, and pressurized to prepare a positive electrode. In the prepared positive electrode, a thickness of the positive active material layer was 50 µm.

Using the positive electrode, and the negative electrode and the electrolyte of Example 1, a 4500 mAh pouch cell was fabricated by the same procedure as in Example 1.

### Comparative Example 2

A positive electrode was prepared by the same procedure as in Example 1, except that the slurry for heat generation suppression layer of Example 1 and the positive active material layer slurry of Example 1 were utilized to prepare a heat suppression layer with a thickness of 10 µm and a positive active material layer with a thickness of 40 µm. A thickness ratio of the heat suppression layer and the positive active material layer was 1:4.

Using the positive electrode, and the negative electrode and the electrolyte of Example 1, A 4500 mAh pouch cell was fabricated by the same procedure as in Example 1.

### Comparative Example 3

A positive electrode was prepared by the same procedure as in Example 1, except that the slurry for heat generation suppression layer of Example 1 and the positive active material layer slurry of Example 1 were utilized to prepare a heat suppression layer with a thickness of 2.3 µm and a positive active material layer with a thickness of 47.7 µm. A thickness ratio of the heat suppression layer and the positive active material layer was 1:21.

Using the positive electrode, and the negative electrode and the electrolyte of Example 1, a 4500 mAh pouch cell was fabricated by the same procedure as in Example 1.

### Comparative Example 4

A positive electrode was prepared by the same procedure as in Example 1, except that the slurry for heat generation suppression layer of Example 4 and the positive active material layer slurry of Example 1 were utilized to prepare a heat suppression layer with a thickness of 10 µm and a positive active material layer with a thickness of 40 µm. A thickness ratio of the heat suppression layer and the positive active material layer was 1:4.

Using the positive electrode, and the negative electrode and the electrolyte of Example 1, a 4500 mAh pouch cell was fabricated by the same procedure as in Example 1.

### Comparative Example 5

A positive electrode was prepared by the same procedure as in Example 1, except that the slurry for heat generation suppression layer of Example 4 and the positive active material layer slurry of Example 1 were utilized to prepare a heat suppression layer with a thickness of 2.3 µm and a positive active material layer with a thickness of 47.7 µm. A thickness ratio of the heat suppression layer and the positive active material layer was 1:21.

Using the positive electrode, and the negative electrode and the electrolyte of Example 1, a 4500 mAh pouch cell was fabricated by the same procedure as in Example 1.

### Comparative Example 6

A positive electrode was prepared by the same procedure as in Example 1, except that the slurry for heat suppression layer of Example 7 and the positive active material layer slurry of Example 1 were utilized to prepare a heat suppression layer with a thickness of 10 µm and a positive active material layer with a thickness of 40µm. A thickness ratio of the heat suppression layer and the positive active material layer was 1:4.

Using the positive electrode, and the negative electrode and the electrolyte of Example 1, a 4500 mAh pouch cell was fabricated by the same procedure as in Example 1.

### Comparative Example 7

A positive electrode was prepared by the same procedure as in Example 1, except that the slurry for heat suppression layer of Example 7 and the positive active material layer slurry of Example 1 were utilized to prepare a heat suppression layer with a thickness of 2.3 µm and a positive active material layer with a thickness of 47.7 µm. A thickness ratio of the heat suppression layer and the positive active material layer was 1:21.

Using the positive electrode, and the negative electrode and the electrolyte of Example 1, a 4500 mAh pouch cell was fabricated by the same procedure as in Example 1.

### Comparative Example 8

A positive electrode was prepared by the same procedure as in Example 1, except that the slurry for heat suppression layer of Example 10 and the positive active material layer slurry of Example 1 were utilized to prepare a heat suppression layer with a thickness of 10 µm and a positive active material layer with a thickness of 40 µm. A thickness ratio of the heat suppression layer and the positive active material layer was 1:4.

Using the positive electrode, and the negative electrode and the electrolyte of Example 1, a 4500 mAh pouch cell was fabricated by the same procedure as in Example 1.

### Comparative Example 9

A positive electrode was prepared by the same procedure as in Example 1, except that the slurry for heat suppression layer of Example 10 and the positive active material layer slurry of Example 1 were utilized to prepare a heat suppression layer with a thickness of 2.3 µm and a positive active material layer with a thickness of 47.7 µm. A thickness ratio of the heat suppression layer and the positive active material layer was 1:21.

Using the positive electrode, and the negative electrode and the electrolyte of Example 1, a 4500 mAh pouch cell was fabricated by the same procedure as in Example 1.

### Experimental Example 1 Test for penetration evaluation

The 4500 mAh pouch cells according to Example 1 to Example 63, and Comparative Examples 1 to 9 were fully charged to 4.47 V cut-off under SOC 100 (charged to be 100% of charge capacity based total charge capacity of cell, if (e.g., when) the cell was charged).

The fully charged cells were completely pierced through the center utilizing a pin with a diameter of 5 mm at a speed of 50 mm/sec.

Among these results, the results of Examples 1 to 63 are shown in Table 1 and the results of Comparative Examples 1 to 9 are shown in Table 2.

In Table 1 and Table 2, O represents ignition and X represents no ignition.

### Experimental Example 2 Measurement of AC-IR resistance and first cycle formation charge

Regarding the pouch cells of Examples 1 to 63 and Comparative Examples 1 to 9, an AC-IR was measured by utilizing a 1 kHz AC resistance measurement equipment. Among the measured AC-IR results, the results of Examples 1 to 63 are shown in Table 1 and the results of Comparative Examples 1 to 9 are shown in Table 2.

The cells which were conducted for measuring AC-IR were formation charged at 0.1C (450 mAh) to check whether charging was occurring or not.

**Table 1**

| | Type of heat suppression compound (D50, nm) | Thickness of heat suppression layer: Thickness of positive active material layer | Penetratio n ignition (SOC 100 condition) | AC-IR (mΩ, SOC 0 condition) |
|---|---|---|---|---|
| Example 1 | FeF₃ 513 | 1:5 (8.3:41.7) | X | 413.6 |
| Example 2 | FeF₃ 513 | 1:10 (4.5:45) | X | 245.3 |
| Example 3 | FeF₃ 513 | 1:20 (2.4:47.6) | X | 104.8 |
| Example 4 | LiFeF₃ 531 | 1:5 (8.3:41.7) | X | 398.4 |
| Example 5 | LiFeF₃ 531 | 1:10 (4.5:45) | X | 211.9 |
| Example 6 | LiFeF₃ 531 | 1:20 (2.4:47.6) | X | 101.5 |
| Example 7 | LiFeF₂ 524 | 1:5 (8.3:41.7) | X | 400.8 |
| Example 8 | LiFeF₂ 524 | 1:10 (4.5:45) | X | 224.9 |
| Example 9 | LiFeF₂ 524 | 1:20 (2.4:47.6) | X | 102.4 |
| Example 10 | TiO₂ 671 | 1:5 | X | 432.8 |
| Example 11 | TiO₂ 671 | 1:10 (4.5:45) | X | 255.7 |
| Example 12 | TiO₂ 671 | 1:20 | X | 107.9 |
| Example 13 | CuF₂ 441 | 1:10 (4.5:45) | X | 237.5 |
| Example 14 | MoCl₅ 817 | 1:10 | X | 274.6 |
| Example 15 | NiF₂ 539 | 1:10 | X | 255.6 |
| Example 16 | FeCl₃ 276 | 1:10 | X | 246.9 |
| Example 17 | CoF₃ 812 | 1:10 | X | 233.4 |
| Example 18 | CoF₂ 760 | 1:10 | X | 238.4 |
| Example 19 | MnF₃ 462 | 1:10 | X | 503.4 |
| Example 20 | NbF₃ 663 | 1:10 | X | 501.9 |
| Example 21 | TiF₄ 539 | 1:10 | X | 468.3 |
| Example 22 | ZnF₂ 476 | 1:10 | X | 472.6 |
| Example 23 | BiF₃ 388 | 1:10 | X | 481.6 |
| Example 24 | SeO₂ 387 | 1:10 | X | 503.1 |
| Example 25 | CuO 846 | 1:10 | X | 426.6 |
| Example 26 | CuO₂ 659 | 1:10 | X | 428.1 |
| Example 27 | P₂S₅ 538 | 1:10 | X | 611.3 |
| Example 28 | P₄S₇ 427 | 1:10 | X | 642.5 |
| Example 29 | NiS₂ 881 | 1:10 | X | 613.3 |
| Example 30 | CoS₂ 766 | 1:10 | X | 632.8 |
| Example 31 | Co₃O₄ 529 | 1:10 | X | 541.3 |
| Example 32 | FeS₂ 394 | 1:10 | X | 539.4 |
| Example 33 | MoO₃ 616 | 1:10 | X | 500.3 |
| Example 34 | SiS₂ 772 | 1:10 | X | 641.8 |
| Example 35 | MnO₂ 411 | 1:10 | X | 541.9 |
| Example 36 | Fe₂O₃ 529 | 1:10 | X | 521.3 |
| Example 37 | V₂O₅ 534 | 1:10 | X | 492.4 |
| Example 38 | Sa 682 | 1:10 | X | 603.7 |
| Example 39 | LiCuF₂ 344 | 1:10 | X | 472.3 |
| Example 40 | LiNiF₂ 538 | 1:10 | X | 462.6 |
| Example 41 | LiFeCl₃ 559 | 1:10 | X | 466.9 |
| Example 42 | LiCoF₃ 651 | 1:10 | X | 452.1 |
| Example 43 | LiCoF₂ 687 | 1:10 | X | 444.8 |
| Example 44 | LiMnF₃ 749 | 1:10 | X | 476.3 |
| Example 45 | LiNbF₃ 463 | 1:10 | X | 489.3 |
| Example 46 | LiTiF₄ 624 | 1:10 | X | 439.4 |
| Example 47 | LiBiF₃ 593 | 1:10 | X | 434.6 |
| Example 48 | LiTiO₂ 522 | 1:10 | X | 426.7 |
| Example 49 | Li₄Ti₅O₁₂ 677 | 1:10 | X | 425.9 |
| Example 50 | LiSeO₂ 746 | 1:10 | X | 481.6 |
| Example 51 | LiCuO 596 | 1:10 | X | 482.0 |
| Example 52 | Li₂CuO₂ 447 | 1:10 | X | 471.6 |
| Example 53 | Li₂P₂S₅ 686 | 1:10 | X | 503.4 |
| Example 54 | LiNiS₂ 598 | 1:10 | X | 512.5 |
| Example 55 | LiCoS₂ 356 | 1:10 | X | 488.4 |
| Example 56 | LiCo₃O₄ 488 | 1:10 | X | 461.6 |
| Example 57 | LiFeS₂ 870 | 1:10 | X | 483.4 |
| Example 58 | LiMoO₃ 662 | 1:10 | X | 492.5 |
| Example 59 | Li₂SiS₂ 810 | 1:10 | X | 503.7 |
| Example 60 | LiMnO₂ 768 | 1:10 | X | 471.6 |
| Example 61 | LiFe₂O₃ 610 | 1:10 | X | 489.3 |
| Example 62 | LiV₂O₅ 525 | 1:10 | X | 464.8 |
| Example 63 | Li₂S₈ 446 | 1:10 | X | 481.6 |

**Table 2**

| | Type of heat suppression compound (D50, nm) | Thickness of heat suppression layer: Thickness of positive active material layer | Penetration ignition (@ SOC 100) / whether test is available or not | AC-IR (mΩ, SOC 0 condition) / Able or unable of charge |
|---|---|---|---|---|
| Comparative Example 1 | - | - | O | 41.8 / Able of charge |
| Comparative Example 2 | FeF₃ 513 | 1:4 | Unable test | 1521.6 / Unable of charge |
| Comparative Example 3 | FeF₃ 513 | 1:21 | O | 94.7 / Able of charge |
| Comparative Example 4 | LiFeF₃ 531 | 1:4 | Unable test | 1513.6 / Unable of charge |
| Comparative Example 5 | LiFeF₃ 531 | 1:21 | O | 93.4 / Able of charge |
| Comparative Example 6 | LiFeF₂ 524 | 1:4 | Unable test | 1623.9 / unable of charge |
| Comparative Example 7 | LiFeF₂ 524 | 1:21 | O | 98.3 / Able of charge |
| Comparative Example 8 | TiO₂ 671 | 1:4 | Unable test | 2198.7 / Unable of charge |
| Comparative Example 9 | TiO₂ 671 | 1:21 | O | 101.7 / Able of charge |

As shown in Table 1, Examples 1 to 63 including the heat suppression layer between the current collector and the positive active material layer and having a thickness ratio of the heat suppression layer and the positive active material layer being of 1:5 to 1:20, exhibited alternating current (AC) resistance of less than 1000 mΩ which renders them able to perform a formation charge and discharge. Thus, the full-charge penetration test was able to be conducted and as a result, no ignition occurred. From these results, it can be seen that the cells of Examples 1 to 63 exhibited superior safety.

As shown in Table 2, Comparative Example 1 without the heat suppression layer had low AC resistance of 41.8 mΩ which was able to conduct formation charge and discharge. Thus, it was possible to conduct the full-charge penetration test, but the ignition occurred, indicating deteriorated safety.

Comparative Examples 2, 4, 6, and 8, including the heat suppression layer with large thickness, exhibited surprisingly high AC resistance of 1000 mΩ or more. Thus, a formation charge and discharge could not be performed and thus, a fully charge ignition test could not be carried out.

In case of Comparative Examples 3, 5, 7, and 9 in which the heat suppression layer was very thin, AC resistance was low, less than 1000 mΩ, allowing for performing a formation charge and discharge. However, the occurrence of ignition indicates poor safety.

The electronic device, vehicle, and/or the battery, *e.g*., a battery controller, and/or any other relevant devices or components according to embodiments of the present disclosure described herein may be implemented utilizing any suitable hardware, firmware (*e.g*., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

While this disclosure has been described in connection with what is presently considered to be practical example embodiments, it is to be understood that the present disclosure is not limited to the disclosed embodiments, but, on the contrary, is intended to cover one or more suitable modifications and equivalent arrangements included within the scope of the appended claims.

## Claims

1. A positive electrode for a rechargeable lithium battery, the positive electrode comprising:
a current collector;
a positive active material layer comprising a positive active material; and
a heat suppression layer between the current collector and the positive active material layer,
wherein a thickness ratio of the heat suppression layer and the positive active material layer is about 1:5 to about 1:20.

2. The positive electrode for the rechargeable lithium battery as claimed in claim 1, wherein the heat suppression layer comprises a compound for suppressing heat generation, the compound being at least one of FeFs, FeF₂, CuF₂, MoCl₅, NiF₂, FeCl₃, CoF₃, CoF₂, MnF₃, NbF₃, TiF₄, ZnF₂, BiF₃, TiO₂, SeO₂, CuO, CuO₂, P₂S₅, P₄S₇, NiS₂, CoS₂, Co₃O₄, FeS₂, MoO₃, SiS₂, MnO₂, Fe₂O₃, V₂O₅, LiFeF₃, LiFeF₂, LiCuF₂, LiNiF₂, LiFeCl₃, LiCoF₃, LiCoF₂, LiMnF₃, LiNbF₃, LiTiF₄, LiBiF₃, LiTiO₂, Li₄Ti₅O₁₂, LiSeO₂, LiCuO, Li₂CuO₂, Li₂P₂S₅, LiNiS₂, LiCoS₂, LiCo₃O₄, LiFeS₂, LiMoO₃, Li₂SiS₂ LiMnO₂, LiFe₂O₃, LiV₂O₅, Li₂S₈, or a combination thereof.

3. The positive electrode for the rechargeable lithium battery as claimed in claim 2, wherein the compound is at least one of FeFs, TiO₂, LiFeF₃, LiFeF₂, or a combination thereof.

4. The positive electrode for the rechargeable lithium battery as claimed in any one of claims 1 to 3, wherein the thickness ratio of the heat suppression layer and the positive active material layer is about 1:8 to about 1:15.

5. The positive electrode for the rechargeable lithium battery as claimed in any one of claims 1 to 4, wherein the thickness of the heat suppression layer is about 1 µm to about 10 µm.

6. The positive electrode for the rechargeable lithium battery as claimed in any one of claims 1 to 4, wherein the thickness of the heat suppression layer is about 1 µm to about 8 µm.

7. The positive electrode for the rechargeable lithium battery as claimed in any one of claims 1 to 6, wherein the thickness of the positive active material layer is about 30 µm to about 200 µm.

8. The positive electrode for the rechargeable lithium battery as claimed in any one of claims 2 to 7, wherein the compound for suppressing heat generation is in a nano size scale.

9. The positive electrode for the rechargeable lithium battery as claimed in any one of claims 2 to 7, wherein the compound for suppressing heat generation has an average particle diameter of about 1 µm or less.

10. The positive electrode for the rechargeable lithium battery as claimed in any one of claims 1 to 9, wherein the heat suppression layer further comprises a binder.

11. The positive electrode for the rechargeable lithium battery as claimed in claim 10, wherein the binder comprises polyvinylidene fluoride, polyvinyl alcohol, carboxymethyl cellulose, hydroxypropyl cellulose, diacetyl cellulose, polyvinylchloride, carboxylated polyvinyl chloride, polyvinyl fluoride, polyethylene oxide, polyvinylpyrrolidone, polyurethane, polytetrafluoroethylene, polyethylene, polypropylene, a styrene-butadiene rubber, an acrylated styrene-butadiene rubber, an epoxy resin, nylon, or a combination thereof.

12. The positive electrode for the rechargeable lithium battery as claimed in any one of claims 1 to 11, wherein the heat suppression layer comprises a compound for suppressing heat generation and a binder, and a mixing ratio of the compound for suppressing heat generation and the binder is a weight ratio of about 200:1 to about 20:1.

13. A rechargeable lithium battery, comprising:
a positive electrode of any one of claims 1 to 12;
a negative electrode comprising a negative active material; and
an electrolyte.
